(19) Europäisches Patentamt
European Patent Office
Office européen des brevets

(11) **EP 2 865 945 A1**

## (12) EUROPEAN PATENT APPLICATION

(43) Date of publication:
**29.04.2015 Bulletin 2015/18**

(21) Application number: **14190056.3**

(22) Date of filing: **23.10.2014**

(51) Int Cl.:
*F23N 1/00* (2006.01)    *F23N 5/18* (2006.01)
*F23R 3/28* (2006.01)    *F23R 3/46* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.10.2013 JP 2013221722**

(71) Applicant: **Mitsubishi Hitachi Power Systems, Ltd. Yokohama 220-8401 (JP)**

(72) Inventors:
• **TATSUMI, Tetsuma**
  **Yokohama, Kanagawa 220-8401 (JP)**
• **NUMATA, Shohei**
  **Yokohama, Kanagawa 220-8401 (JP)**
• **YOKOTA, Osami**
  **Yokohama, Kanagawa 220-8401 (JP)**

(74) Representative: **MERH-IP**
   **Matias Erny Reichl Hoffmann**
   **Paul-Heyse-Strasse 29**
   **80336 München (DE)**

(54) **Gas turbine combustor and gas turbine combustor control method**

(57)    The burners include a central burner and a plurality of outer burners disposed around the central burner. Each of the outer burners is equipped with a fuel supply system that includes a fuel flow regulating valve (61-63). The outer circumference of the combustor liner (10) is provided with a cylindrical flow sleeve (11). At least one flow velocity measurement unit is disposed in a circular flow path formed between the combustor liner (10) and the flow sleeve (11) to measure the flow velocity of air flowing downward. The gas turbine combustor also includes a control device (100) that adjusts the fuel flow rate of the fuel, which is to be supplied to the outer burners, in accordance with the flow velocity of the air in the circular flow path, which is measured by the flow velocity measurement units.

*FIG. 1*

**Description**

FIELD OF THE INVENTION

The present invention relates to a gas turbine combustor and to a gas turbine combustor control method.

BACKGROUND OF THE INVENTION

From the viewpoint of environmental load reduction, it is demanded that NOx emissions from a gas turbine be further reduced. As a measure of reducing the NOx emissions from a gas turbine combustor, a premixed burner is employed to reduce the amount of cooling air for a combustor liner, thereby enleaning an air-fuel premixture. However, it is anticipated that a local fuel-air ratio may increase due to the drift of air in the combustor to cause a local rise in the metal temperature of the combustor liner and an increase in the amount of NOx.

A technology disclosed in Japanese Unexamined Patent Application Publication No. 2008-082330 provides control of temperature distribution in a plurality of combustion chambers by adjusting the flow rate of fuel, the flow rate of air, or the flow rates of both the fuel and air that are distributed to a plurality of fuel nozzles disposed in a combustor having the combustion chambers.

In an outer transition piece, which acts as an air inlet of a gas turbine combustor, the flow rate of circumferential air inflow may become biased. In such an instance, the flow rate of combustion air supplied to a burner disposed at a circumferential position at which the flow rate of air inflow may decrease to increase the local fuel-air ratio, thereby causing a local rise in the metal temperature of the combustor liner. Further, an increase in a local flame temperature may increase the amount of NOx.

Japanese Unexamined Patent Application Publication No. 2008-082330 describes the technology for controlling the temperature distribution in combustion chambers. However, it does not describe a technology that achieves low NOx emissions by exercising dynamic management of the local fuel-air ratio. The present invention has been made to provide a gas turbine combustor and a gas turbine combustor control method that suppress a local rise in the metal temperature of a combustor liner and an increase in the amount of NOx.

SUMMARY OF THE INVENTION

A configuration defined in the appended claims is employed in order to solve the above problem. The present application includes a plurality of units that solve the above problem. According to an exemplary aspect of the present invention, there is provided a gas turbine combustor. The gas turbine combustor includes a combustor liner and a plurality of burners. The combustor liner forms a combustion chamber that mixes and burns fuel and air. The burners are positioned upstream of the combustion chamber to supply the fuel to the combustion chamber. The burners include a central burner and a plurality of outer burners disposed around the central burner. Each of the outer burners is equipped with a fuel supply system. The fuel supply system includes a fuel flow regulating valve. A cylindrical flow sleeve is disposed on the outer circumference of the combustor liner. At least one flow velocity measurement unit is disposed in a circular flow path formed between the combustor liner and the flow sleeve to measure the flow velocity of air flowing downward. The gas turbine combustor also includes a control device that adjusts the flow rate of the fuel, which is to be supplied to the outer burners, in accordance with the flow velocity of air in the circular flow path, which is measured by the flow velocity measurement unit.

The present invention makes it possible to implement a gas turbine combustor and a gas turbine combustor control method that suppress a local rise in the metal temperature of a combustor liner and an increase in the amount of NOx.

BRIEF DESCRIPTION OF THE DRAWINGS

FIG. 1 is a system diagram illustrating a schematic configuration of a gas turbine plant to which a gas turbine combustor according to a first embodiment of the present invention is applied;
FIG. 2 is a diagram illustrating in detail a configuration of the gas turbine combustor according to the first embodiment;
FIG. 3 is a front view, as viewed from a combustion chamber, illustrating an air hole plate portion of the gas turbine combustor according to the first embodiment, which is shown in FIG. 2;
FIG. 4 is a bar graph illustrating operating state quantities in each outer burner, namely, an air flow velocity, a fuel flow rate, and a sector fuel-air ratio, that prevail during a gas turbine combustor operation to which the present invention is not applied;

FIG. 5 is a bar graph illustrating operating state quantities in each outer burner, namely, an air flow velocity, a fuel flow rate, and a sector fuel-air ratio, that prevail while a gas turbine combustor control method according to the first embodiment is applied;

FIG. 6 is a flowchart illustrating the gas turbine combustor control method according to the first embodiment;

FIG. 7 is a cross-sectional view, as viewed from the combustion chamber, illustrating the air hole plate portion of the gas turbine combustor according to a second embodiment of the present invention;

FIG. 8 illustrates a modification of the second embodiment;

FIG. 9 illustrates a configuration of the gas turbine combustor in a casing in accordance with a third embodiment of the present invention; and

FIG. 10 illustrates a modification of the third embodiment.

DETAILED DESCRIPTION OF THE PREFERRED EMBODIMENTS

A gas turbine combustor and a gas turbine combustor control method according to embodiments of the present invention will now be described with reference to the accompanying drawings.

First Embodiment

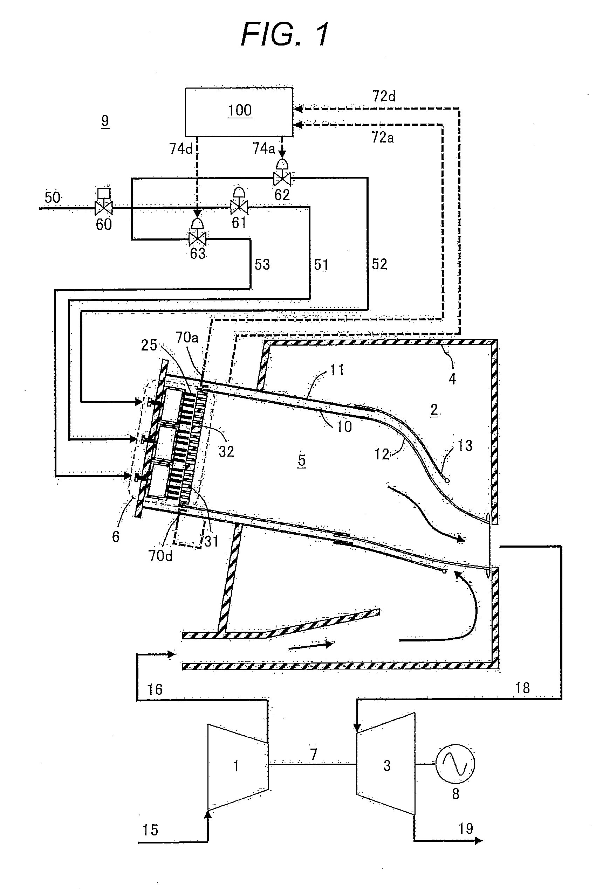

The gas turbine combustor and the gas turbine combustor control method according to a first embodiment of the present invention will now be described with reference to FIGS. 1 to 6.

FIG. 1 is a system diagram illustrating an overall configuration of a power generation gas turbine plant.

In the gas turbine plant 9 shown in FIG. 1, a power generation gas turbine includes a compressor 1, a gas turbine combustor 2, a turbine 3, a generator 8, and a shaft 7. The compressor 1 generates high-pressure air 16 by compressing intake air 15. The gas turbine combustor 2 mixes the high-pressure air 16 generated by the compressor 1 with a gas fuel 50 and burns the resulting mixture to generate a high-temperature combustion gas 18. The turbine 3 is driven by the high-temperature combustion gas 18 generated by the gas turbine combustor 2. The generator 8 rotates to generate electrical power when the turbine 3 is driven. The shaft 7 couples the compressor 1, the turbine 3, and the generator 8 together.

The gas turbine combustor 2 is housed in a casing 4. A multi-burner 6 having a plurality of fuel nozzles 25 is disposed on the top of the gas turbine combustor 2. A combustor liner 10, which is substantially shaped like a cylinder, is disposed in the gas turbine combustor 2 positioned downstream of the multi-burner 6 to separate the high-pressure air from the combustion gas. A combustion chamber 5 is formed in the combustor liner 10 to mix the high-pressure air 16 with the gas fuel 50 and burn the resulting mixture to generate the high-temperature combustion gas 18.

A flow sleeve 11, which is substantially shaped like a cylinder, is disposed on the outer circumference of the combustor liner 10 to serve as an outer circumferential wall that forms an air flow path through which the high-pressure air flows downward. The flow sleeve 11 has a larger diameter than the combustor liner 10 and is disposed to form a cylinder that is substantially concentric with the combustor liner 10.

An inner transition piece 12 is disposed downstream of the combustor liner 10 to direct the high-temperature combustion gas 18, which is generated in the combustion chamber 5 of the gas turbine combustor 2, to the turbine 3.

Further, an outer transition piece 13 is disposed downstream of the flow sleeve 11, which is positioned toward the outer circumference of the inner transition piece 12.

The intake air 15 is compressed by the compressor 1 to become the high-pressure air 16. The high-pressure air 16 fills the casing 4, and then flows into a space between the inner transition piece 12 and outer transition piece 13 to convectively cool the inner transition piece 12 from an outer wall surface.

Further, the high-pressure air 16 passes through a circular flow path formed between the flow sleeve 11 and the combustor liner 10 and flows toward the head of the gas turbine combustor 2. While the high-pressure air 16 is flowing, it is used to convectively cool the combustor liner 10.

After convectively cooling the combustor liner 10, the high-pressure air 16 flows, as combustion air, into the combustion chamber 5 from many air holes 32 in an air hole plate 31 that is positioned on an upstream wall surface of the combustion chamber 5 of the gas turbine combustor 2.

Pitot tubes 70a, 70d are disposed in the circular flow path formed between the flow sleeve 11 and the combustor liner 10 and used as flow velocity measurement units to measure the flow velocity of the combustion air.

The combustion air flowing into the combustor line 10 from the many air holes 32 and the fuel ejected from the fuel nozzles 25, which form the multi-burner 6, are both burned in the combustion chamber 5 formed in the combustor liner 10 to generate the high-temperature combustion gas 18.

The high-temperature combustion gas 18, which is generated as a result of burning in the combustion chamber 5 of the combustor liner 10, is supplied to the turbine 3 through the inner transition piece 12 in order to drive the turbine 3. After being used to drive the turbine 3, the high-temperature combustion gas 18 is discharged from the turbine 3 to become an exhaust gas 19.

Driving force derived from the turbine 3 is transmitted to the compressor 1 and to the generator 8 through the shaft 7. A part of the driving force derived from the turbine 3 drives the compressor 1 to compress air and generate the high-pressure air. Another part of the driving force derived from the turbine 3 rotates the generator 8 to generate electrical power.

The multi-burner 6, which is formed of the fuel nozzles 25 of the gas turbine combustor 2, is provided with three fuel systems, namely, fuel systems 51-53, that supply the fuel 50, as shown in FIG. 1.

The fuel systems 51-53 are respectively equipped with fuel flow regulating valves 61-63. Flow rates of the fuel 50 supplied through the fuel systems 51-53 are adjusted when the valve openings of the fuel flow regulating valves 61-63 are manipulated in accordance with control signals 7 4a, 7 4d from a control device 100. Adjusting the flow rates of the fuel 50 controls the amount of electrical power generated by the gas turbine plant 9.

The control device 100 acquires air flow velocity information 72a, 72d measured by the pitot tubes 70a, 70d and adjusts the valve openings of the fuel flow regulating valves 62, 63 in accordance with the control signals 74a, 74d.

An upstream fuel system branching off into the fuel systems 51-53 is equipped with a fuel shutoff valve 60 that shuts off the supply of the fuel 50.

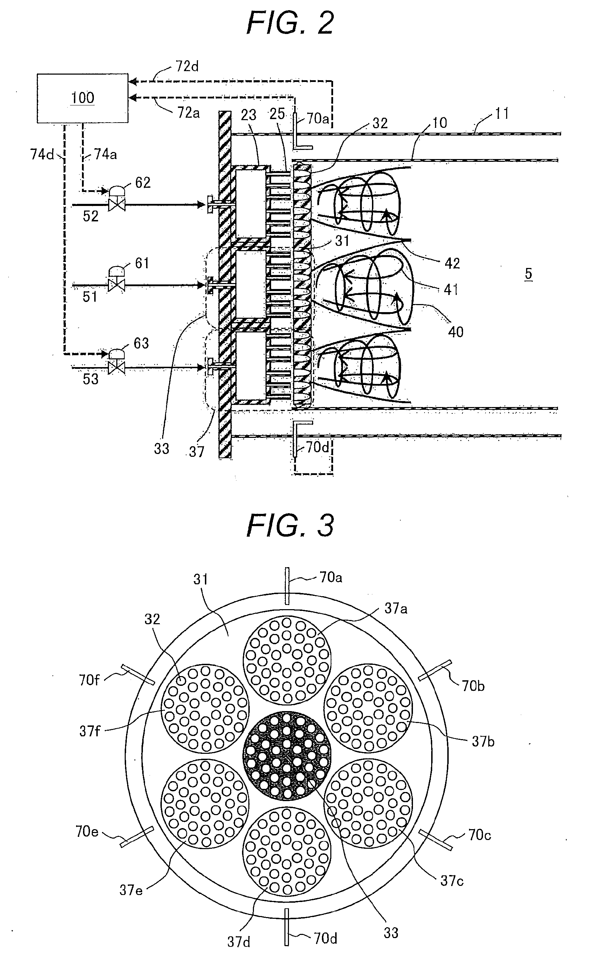

FIG. 2 is a partial cross-sectional view illustrating in detail the disposition of the multi-burner 6, the pitot tubes 70a, 70d, the control device 100, the fuel systems 51-53, and the fuel flow regulating valves 61-63, which are included in the gas turbine combustor 2 according to the present embodiment.

FIG. 3 is a front view of the gas turbine combustor 2, as viewed from the combustion chamber 5, illustrating the air hole plate 31.

As shown in FIGS. 2 and 3, the multi-burner 6 having the fuel nozzles 25 of the gas turbine combustor 2 according to the present embodiment includes one central burner 33 and six outer burners 37a-37f. The central burner 33 is disposed at the center of the air hole plate 31, which is shaped like a disk. The outer burners 37a-37f are disposed between the center and the outer circumference of the air hole plate 31, positioned toward the outer circumference of the central burner 33, and spaced apart from each other. In the present embodiment, the central burner 33 is positioned at the axial center of the gas turbine combustor 2.

Many fuel nozzles 25, which form the central burner 33 and outer burners 37, are disposed in the central burner 33 and in the outer burners 37. Further, a fuel nozzle header 23 is disposed upstream of the fuel nozzles 25 to distribute the fuel to the fuel nozzles 25.

The air hole plate 31 having the many air holes 32, which pass air and the fuel ejected from the fuel nozzles 25 and inject them into the combustion chamber 5 of the gas turbine combustor 2, is disposed downstream of the fuel nozzles 25 and upstream of the combustion chamber 5.

As shown in FIG. 3, which is a front view of the gas turbine combustor 2, the air hole plate 31 having the many air holes 32, which are formed on one-to-one basis for the many fuel nozzles 25 disposed in the one central burner 33 and in the six outer burners 37a-37f around the central burner 33, is disposed so as to zone the combustion chamber 5.

The many air holes 32 formed in the air hole plate 31 produce a swirling flow 40, which is the flow of a fluid mixture of fuel and air, in the combustion chamber 5 of the gas turbine combustor 2, which is positioned downstream of the burners, namely, the central burner 33 and the outer burners 37. A circulating flow 41 produced by the swirling flow 40 keeps a flame 42 that is formed when the fuel burns in the combustion chamber 5 of the gas turbine combustor 2.

In the gas turbine combustor 2 according to the present embodiment, the one central burner 33 disposed at the center of the air hole plate 31 includes the many fuel nozzles 25. The fuel system 51, which supplies the fuel to these fuel nozzles 25, is connected to the fuel nozzles 25. Further, the six outer burners 37a-37f disposed in a peripheral region of the air hole plate 31 also include the many fuel nozzles 25. The fuel systems 52, 53, which supply the fuel to these fuel nozzles 25, are connected to the fuel nozzles 25.

The pitot tubes 70a-70f are disposed in the circular flow path formed between the flow sleeve 11 and the combustor liner 10. As shown in FIG. 3, the pitot tubes 70a-70f are disposed on the outer circumference of the outer burners 37, which are disposed on the outer circumference of the air hole plate 31, and used to measure the flow velocity distribution of the combustion air flowing into the outer burners 37a-37f.

FIG. 2 is a lateral cross-sectional view of the multi-burner 6. Therefore, the outer burners 37b, 37c, 37e, 37f are not shown in FIG. 2 because they are not visible in the lateral cross-sectional view. The control device 100 acquires, for example, the air flow velocity information 72a, 72d measured by the pitot tubes 70a, 70d, and adjusts the valve openings of the fuel flow regulating valves 61, 63.

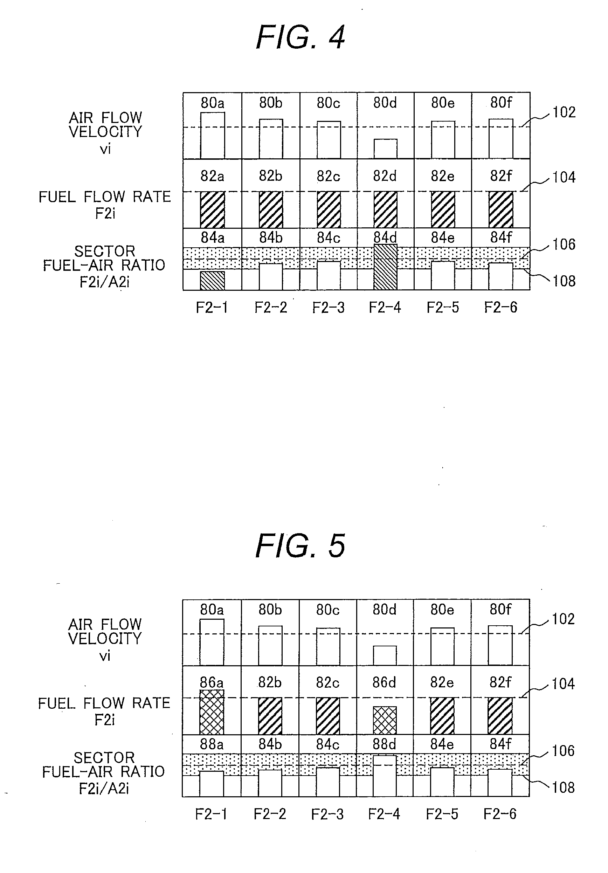

A method of controlling the gas turbine combustor 2 according to the present embodiment will now be described with reference to FIGS. 4 to 6.

FIG. 4 is a bar graph illustrating operating state quantities in the outer burners 37a-37f, namely, an air flow velocity vi, a fuel flow rate F2i, and a fuel-air ratio of each outer burner (hereinafter referred to as the sector fuel-air ratio) F2i/A2i, that prevail during a gas turbine combustor operation to which the present invention is not applied. It is assumed that the additional character i = 1 to 6. The additional character i is used to identify the operating state quantity of one of a plurality of outer burners 37 (F2-i).

In the outer transition piece 13, which acts as an air introduction portion of the gas turbine combustor 2 shown in FIG. 1, the flow rate of circumferential air inflow may become biased.

The present embodiment will be described with reference to a case where the flow rate of air inflow to a circumferential position at which the outer burner 37d is disposed is low and the flow rate of air inflow to a circumferential position at which the outer burner 37a is disposed is high. In this case, referring to FIG. 3, the flow rate of combustion air supplied to the outer burner 37d adj acent to the pitot tube 70d decreases, and the flow rate of combustion air supplied to the outer burner 37a adjacent to the pitot tube 70a increases.

The air flow velocity vi shown in FIG. 4 is measured at the outer circumference of each of the outer burners 37a-37f. At the outer burner 37d (F2-4), the flow velocity is lower than an average flow velocity 102. At the outer burner 37a (F2-1), the flow velocity is higher than the average flow velocity 102.

The fuel flow rate F2i of the fuel to be supplied to each outer burner 37 is set to a prescribed fuel flow rate 104 that prevails during a rated load operation of the gas turbine. The same fuel flow rate F2i is set for the outer burners 37a (F2-1) to 37f (F2-6).

Consequently, the sector fuel-air ratio F24/A24 of the outer burner 37d (F2-4) is above a prescribed fuel-air ratio 106 that prevails during a rated load operation of the gas turbine. Meanwhile, the sector fuel-air ratio F21/A21 of the outer burner 37a (F2-1) is below the prescribed fuel-air ratio 106 prevailing during a rated load operation of the gas turbine.

As the sector fuel-air ratio F24/A24 increases, the metal temperature of the combustor liner 10 at a circumferential position at which the outer burner 37d (F2-4) is disposed rises locally. Meanwhile, the fuel-air ratio F21/A21 decreases so that the metal temperature of the combustor liner 10 at a circumferential position at which the outer burner 37a (F2-1) is disposed lowers locally.

In the above instance, temperature deviation increases in a circumferential direction of the combustor liner 10. Thermal stress is then generated to decrease the structural reliability of the combustor liner 10. Further, the local flame temperature of the outer burner 37d (F2-4) rises to increase the amount of NOx.

FIG. 5 is a bar graph illustrating operating state quantities in each outer burner 37, namely, an air flow velocity vi, a fuel flow rate F2i, and a sector fuel-air ratio F2i/A2i, that prevail during a gas turbine combustor operation according to the present embodiment.

As described earlier, when the fuel flow rate F2i of the fuel to be supplied to each outer burner 37 is set to the prescribed fuel flow rate 104 prevailing during a rated load operation of the gas turbine, the sector fuel-air ratio F24/A24 of the outer burner 37d (F2-4) is above the prescribed fuel-air ratio 106 prevailing during a rated load operation of the gas turbine. Meanwhile, the sector fuel-air ratio F21/A21 of the outer burner 37a (F2-1) is below the prescribed fuel-air ratio 106 prevailing during a rated load operation of the gas turbine.

Under the above circumstances, the present embodiment optimizes the sector fuel-air ratio F2i/A2i by adjusting the fuel flow rate F2i in accordance with the air flow velocity vi.

FIG. 4 shows an optimal fuel-air ratio range 108 of the sector fuel-air ratio F2i/A2i. The sector fuel-air ratio F24/A24 of the outer burner 37d (F2-4) is above the upper limit of the optimal fuel-air ratio range 108. Therefore, the sector fuel-air ratio F24/A24 is placed within the optimal fuel-air ratio range 108 by decreasing a fuel flow rate 82d of the fuel to be supplied to the outer burner 37d (F2-4).

As shown in FIG. 5, the sector fuel-air ratio F24/A24 can be placed within the optimal fuel-air ratio range 108 by decreasing the fuel flow rate for the outer burner 37d (F2-4) to a fuel flow rate 86d. Further, the sector fuel-air ratio F21/A21 can be placed within the optimal fuel-air ratio range 108 by increasing the fuel flow rate for the outer burner 37a (F2-1) to a fuel flow rate 86a.

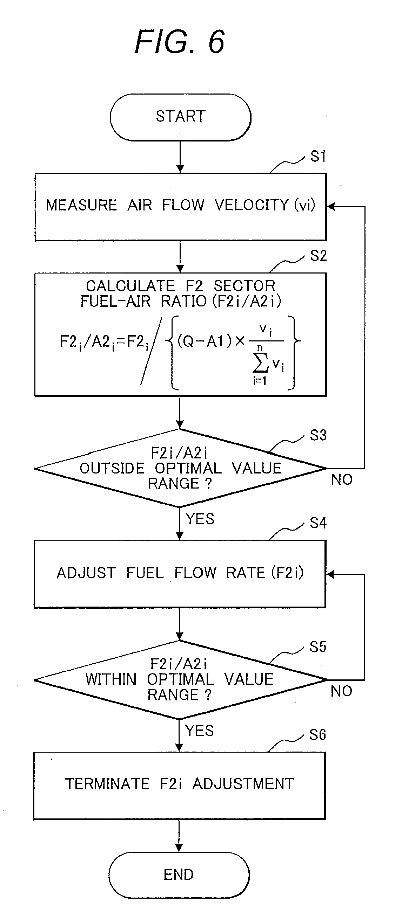

FIG. 6 is a flowchart illustrating the gas turbine combustor control method according to the present embodiment. The gas turbine combustor control method according to the present embodiment will now be described in detail step by step. The following control method may be executed by the control device 100.

To acquire operating information about the gas turbine combustor, the control device 100 measures the air flow velocity vi by using the pitot tubes 70a-70f (step 1).

In accordance with the air flow velocity vi, the control device 100 calculates the sector fuel-air ratio F2i/A2i (step 2). Equation 1 is used to calculate the sector fuel-air ratio F2i/A2i. F2i is a fuel flow rate. A2i is a combustion air flow rate for an outer burner. A2 is a combustion air flow rate for all outer burners. Q is a supply air flow rate per combustor can. vi is a flow velocity. A1 is a combustion air flow rate for the central burner. n is the number of outer burners.

$$F2_i/A2_i = F2_i \Big/ \left( A2 \times \frac{v_i}{\sum\limits_{i=1}^{n} v_i} \right) = F2_i \Big/ \left\{ (Q-A1) \times \frac{v_i}{\sum\limits_{i=1}^{n} v_i} \right\} \qquad \text{--- Equation 1}$$

Air that flows in the circular flow path formed between the flow sleeve 11 and the combustor liner 10 and is targeted for flow velocity measurement includes combustion air to be supplied to the central burner and to the outer burners. Therefore, the combustion air flow rate A1 for the central burner, which is determined when an operation plan is formed, needs to be subtracted from the supply air flow rate Q per combustor can in order to acquire the combustion air flow rate A2 for all outer burners.

The combustion air A2 for all outer burners flows into the outer burner 37 distributively in each circumferential direction in accordance with measured circumferential flow velocity distribution. Therefore, the sector fuel-air ratio F2i/A2i is calculated from Equation 1.

Next, the control device 100 determines whether the sector fuel-air ratio F2i/A2i calculated in step 2 is outside an optimal value range (step 3). The optimal value range is defined by setting an upper-limit value and a lower-limit value. If the sector fuel-air ratio is within the optimal value range, processing returns to step 1. If, on the other hand, the sector fuel-air ratio is outside the optimal value range, processing proceeds to step 4.

The fuel flow rate F2i is controlled by adjusting a fuel flow regulating valve in order to place the sector fuel-air ratio F2i/A2i within the optimal value range (step 4). The fuel flow rate F2i is decreased if the sector fuel-air ratio F2i/A2i is above the upper limit of the optimal value range or increased if the sector fuel-air ratio F2i/A2i is below the lower limit of the optimal value range.

Next, the control device 100 determines whether the sector fuel-air ratio F2i/A2i adjusted in step 4 is within the optimal value range (step 5). If the adjusted sector fuel-air ratio F2i/A2i is outside the optimal value range, processing returns to step 4. If, on the other hand, the adjusted sector fuel-air ratio F2i/A2i is within the optimal value range, the fuel flow rate adjustment terminates (step 6).

The present embodiment has been described on the assumption that an optimal fuel-air ratio range is defined to exercise control. However, if the fuel-ratio air needs to be managed more stringently, control may be exercised with an optimal value defined instead of an optimal value range. It should be noted, however, that exercising control with an optimal value defined may result in heavier control burden than exercising control with an optimal value range defined.

As described above, the present embodiment includes the flow velocity measurement units, which are disposed in the circular flow path formed between the combustor liner and the flow sleeve to measure the flow velocity of air flowing downward, and the control device, which adjusts the fuel flow rate of fuel to be supplied to the outer burners in accordance with the air flow velocity in the circular flow path that is measured by the flow velocity measurement units. Having the above-described configuration, the present embodiment makes it possible to operate a gas turbine combustor having a multi-burner in consideration of the local fuel-air ratio of each burner. As the local fuel-air ratio of each burner is optimized by adjusting the fuel flow rate in accordance with the local fuel-air ratio of each burner, it is possible to implement a gas turbine combustor and a gas turbine combustor control method that suppress an increase in the amount of NOx and a local rise in a liner metal temperature.

Further, the present embodiment is configured so that the disposed flow velocity measurement units are the same in number as the disposed outer burners, and that the disposed gas turbine combustor is equal in circumferential phase to the disposed outer burners. Therefore, air flow velocity distribution in the circular flow path during an operation can be accurately determined. This makes it possible to accurately determine the amounts of air flowing into the outer burners and optimize the local fuel-air ratio of each burner to suppress an increase in the amount of NOx and a local rise in the liner metal temperature with increased certainty.

Second Embodiment

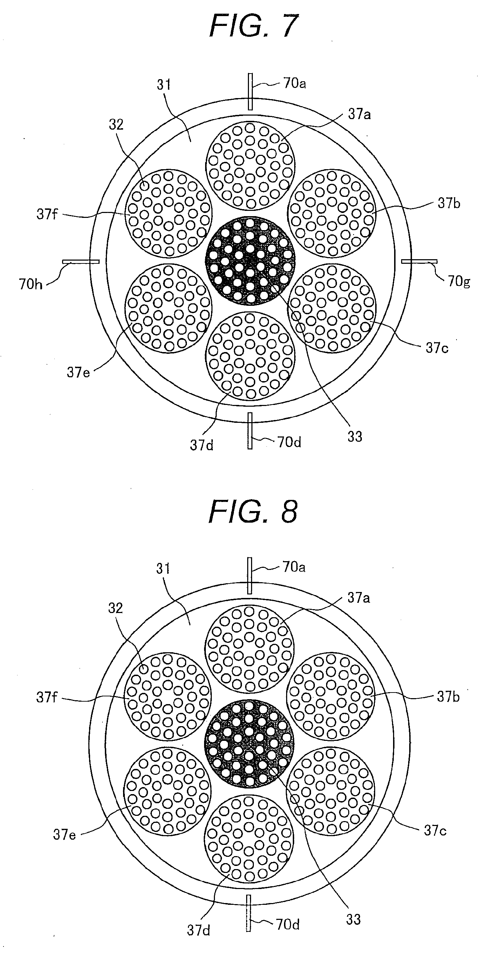

FIG. 7 is a cross-sectional view, as viewed from the combustion chamber, illustrating the air hole plate portion of the gas turbine combustor according to a second embodiment of the present invention. In the second embodiment, the number of pitot tubes 70, which act as the flow velocity measurement units, is decreased. A total of four pitot tubes 70a, 70d, 70g, 70h are disposed. The pitot tube 70a is disposed on an upper portion of the multi-burner 6. The pitot tube 70d is disposed on a lower portion of the multi-burner 6. The pitot tubes 70g, 70h are disposed on the other portions.

As the outer burner 37b and the outer burner 37c are vertically symmetrical to each other, the pitot tube 70g may representatively measure the flow velocities of two sectors. In such an instance, flow velocity information measured by the pitot tube 70g is used to calculate the fuel-air ratio of an outer burner positioned toward the pitot tube 70h. When the flow velocity information measured by one pitot tube 70g is also used to calculate the fuel-air ratio of an outer burner positioned toward the pitot tube 70h as mentioned above, a simpler structure and a simpler control scheme may be used to adjust the fuel-air ratio and suppress an increase in the amount of NOx and a local rise in the liner metal temperature.

FIG. 8 illustrates a modification of the second embodiment in which the number of pitot tubes is further decreased. When a bias in the air flow rate of air inflow is structurally known, the flow velocity may be representatively measured at two points at which the air flow rate of air inflow is maximized and minimized. In this modified embodiment, the pitot tubes 70a, 70d are used as representative pitot tubes. In this case, measurements at two points will suffice. Therefore, an even simpler structure and an even simpler control scheme may be used to adjust the fuel-air ratio and suppress an increase in the amount of NOx and a local rise in the liner metal temperature.

The second embodiment, which has been described above, also optimizes the local fuel-air ratio of each burner in a gas turbine combustor having a multi-burner, thereby making it possible to implement a gas turbine combustor and a gas turbine combustor control method that suppress an increase in the amount of NOx and a local rise in the liner metal temperature.

Third Embodiment

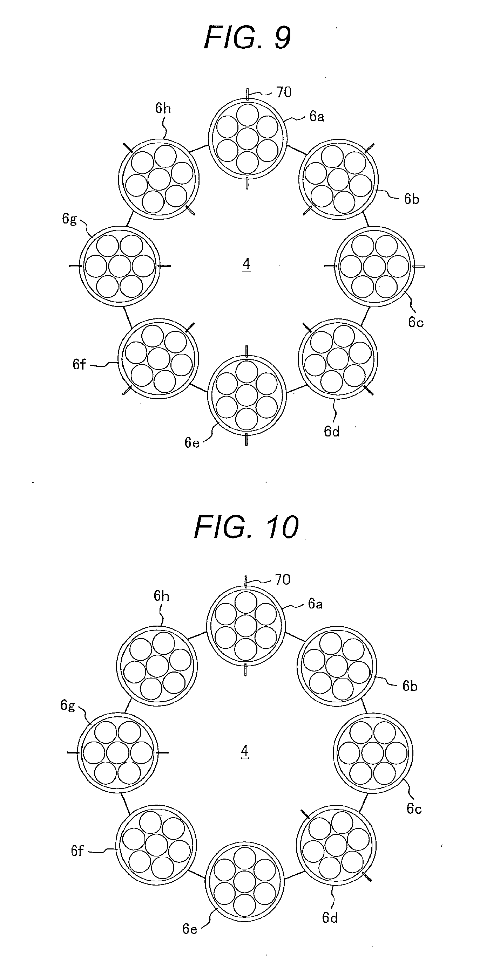

FIG. 9 illustrates a configuration of the gas turbine combustor in a casing in accordance with a third embodiment of the present invention. In the third embodiment, which relates to the gas turbine combustor of a multi-can combustor type, the disposition of multi-burners 6 (combustor cans) in the casing, which distributes air from the outlet of the compressor to each combustor can, is described.

In all the disposed multi-burners 6a-6h, the present embodiment adjusts the fuel flow rate in accordance with the flow velocity distribution in the circular flow path formed between the flow sleeve 11 and the combustor liner 10. Each multi-burner 6 includes a total of two pitot tubes 70. One pitot tube is disposed toward the inner circumference, and the other pitot tube is disposed toward the outer circumference.

FIG. 10 illustrates a modification of the third embodiment. In this modified embodiment, the number of multi-burners 6 for measuring the flow velocity in the circular flow path formed between the flow sleeve 11 and the combustor liner 10 is decreased in accordance with the positions of the multi-burners 6 disposed in the casing 4. More specifically, three multi-burners 6a, 6d, 6g are used. As circumferentially disposed multi-burners 6 that oppose each other exhibit similar flow characteristics, the fuel flow rates of opposing multi-burners 6 may be controlled in accordance with the flow velocity distribution of one multi-burner 6.

The third embodiment, which has been described above, also optimizes the local fuel-air ratio of each burner in a gas turbine combustor having a multi-burner, thereby making it possible to implement a gas turbine combustor and a gas turbine combustor control method that suppress an increase in the amount of NOx and a local rise in the liner metal temperature.

Although the third embodiment has been described on the assumption that the gas turbine combustor shown in FIG. 8 is used as each of the combustor cans, the gas turbine combustor shown, for instance, in FIG. 3 or in FIG. 7 may alternatively be used.

The foregoing embodiments have been described on the assumption that pitot tubes are used as air flow velocity measurement units. However, the flow velocity measurement units are not limited to pitot tubes. Various velocity meters may alternatively be used as the flow velocity measurement units.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

DESCRIPTION OF REFERENCE NUMERALS

1... Compressor
2... Gas turbine combustor
3... Turbine
4... Casing
5... Combustion chamber
6, 6a-6h... Multi-burner
7... Shaft

8... Generator
9... Gas turbine plant
10... Combustor liner
11... Flow sleeve
12... Inner transition piece
13... Outer transition piece
15... Intake air
16... High-pressure air
17... Combustion air
18... High-temperature combustion gas
19... Exhaust gas
23... Fuel nozzle header
25... Fuel nozzle
31... Air hole plate
32... Air hole
33... Central burner
37, 37a-37f... Outer burner
40... Swirling flow
41... Circulating flow
42... Flame
50... Fuel
51-53... Fuel system
60... Fuel shutoff valve
61-63... Fuel flow regulating valve
70, 70a-70h... Pitot tube
72a, 72b... Air flow velocity information
74a, 74b... Control signal
80a-80f... Air flow velocity
82a-82f, 86a, 86d... Fuel flow rate
84a-84f, 88a, 88d... Sector fuel-air ratio
100... Control device
102... Average flow velocity
104... Prescribed fuel flow rate prevailing during rated load operation of gas turbine
106... Prescribed fuel-air ratio prevailing during rated load operation of gas turbine
108... Optimal fuel-air ratio range

**Claims**

1.  A gas turbine combustor (2) comprising:

    a combustor liner (10) that forms a combustion chamber (5) that mixes and burns fuel and air; and
    a plurality of burners that are positioned upstream of the combustion chamber (5) to supply the fuel to the combustion chamber (5);
    wherein the burners include a central burner (33) and a plurality of outer burners (37a-37f) disposed around the central burner (33);
    wherein each of the outer burners (37a-37f) is equipped with a fuel supply system that includes a fuel flow regulating valve (61-63);
    wherein the outer circumference of the combustor liner (10) is provided with a cylindrical flow sleeve (11);
    wherein at least one flow velocity measurement unit is disposed in a circular flow path formed between the combustor liner (10) and the flow sleeve (11) to measure the flow velocity of air flowing downward; and
    wherein the gas turbine combustor (2) includes a control device (100) that adjusts the fuel flow rate of the fuel, which is to be supplied to the outer burners (37a-37f), in accordance with the flow velocity of the air in the circular flow path, which is measured by the flow velocity measurement units.

2.  The gas turbine combustor (2) according to claim 1, wherein the control device (100) calculates the fuel-air ratio of the outer burners (37a-37f) in accordance with flow velocity information measured by the flow velocity measurement units, and adjusts the fuel flow rate in accordance with the calculated fuel-air ratio.

3. The gas turbine combustor (2) according to claim 1 or 2, wherein the flow velocity measurement units are disposed at two points at which the air flow velocity is maximized and minimized within air flow velocity distribution in the circular flow path.

4. The gas turbine combustor (2) according to at least one of the claims 1-3, wherein the flow velocity information measured by the flow velocity measurement units is used to calculate the fuel-air ratio of the outer burners (37a-37f) and adjust the fuel flow rate in accordance with the calculated fuel-air ratio.

5. The gas turbine combustor (2) according to claim 1 or 2, wherein the disposed flow velocity measurement units are the same in number as the disposed outer burners (37a-37f); and wherein the disposed gas turbine combustor (2) is equal in circumferential phase to the disposed outer burners (37a-37f).

6. A multi-can gas turbine combustor having a plurality of combustor cans (6), comprising:

   a casing that distributes air from the outlet of a compressor to the combustor cans (6);
   wherein the casing houses the combustor cans (6) that are circumferentially disposed;
   wherein the combustor cans (6) include a combustor liner, which forms a combustion chamber that mixes and burns fuel and air, and a plurality of burners, which are disposed upstream of the combustion chamber (5) to supply the fuel to the combustion chamber (5), the burners including a central burner and a plurality of outer burners disposed around the central burner; and
   wherein the gas turbine combustor includes the gas turbine combustor according to any one of claims 1 to 5 as at least one of the combustor cans (6).

7. The gas turbine combustor according to claim 6, wherein the combustor cans (6) include a combustor can with the flow velocity measurement unit and a combustor can (6) without the flow velocity measurement unit; and wherein the fuel flow rate of the fuel to be supplied to the outer burners (37a-37f) for the combustor can without the flow velocity measurement unit is adjusted in accordance with air flow velocity distribution of the combustor can with the flow velocity measurement unit.

8. A gas turbine combustor control method for a gas turbine combustor (2) that includes a combustor liner (10), which forms a combustion chamber (5) that mixes and burns fuel and air, a plurality of burners, which are positioned upstream of the combustion chamber to supply the fuel to the combustion chamber (5), and a cylindrical flow sleeve (11), which is disposed on the outer circumference of the combustor liner (10), the burners including a central burner (33) and a plurality of outer burners (37a-37f) disposed around the central burner (33), each of the outerburners (37a-37f) being equipped with a fuel supply system, the fuel supply system including a fuel flow regulating valve (61-63), the gas turbine combustor control method comprising the steps of:'
   measuring the flow velocity of air flowing downward in a circular flow path formed between the combustor liner (10) and the flow sleeve (11); and
   adjusting the fuel flow rate of the fuel to be supplied to the outer burners (37a-37f) in accordance with the measured air flow velocity in the circular flow path.

9. The gas turbine combustor control method according to claim 8, further comprising the steps of:

   calculating the fuel-air ratio of the outer burners (37a-37f) in accordance with the measured air flow velocity in the circular flow path; and
   adjusting the fuel flow rate of the fuel to be supplied to the outer burners (37a-37f) in accordance with the calculated fuel-air ratio.

# FIG. 1

## FIG. 2

## FIG. 3

## FIG. 4

| | 80a | 80b | 80c | 80d | 80e | 80f | |
|---|---|---|---|---|---|---|---|
| AIR FLOW VELOCITY vi | | | | | | | 102 |
| | 82a | 82b | 82c | 82d | 82e | 82f | 104 |
| FUEL FLOW RATE F2i | | | | | | | |
| | 84a | 84b | 84c | 84d | 84e | 84f | 106 |
| SECTOR FUEL-AIR RATIO F2i/A2i | | | | | | | 108 |
| | F2-1 | F2-2 | F2-3 | F2-4 | F2-5 | F2-6 | |

## FIG. 5

| | 80a | 80b | 80c | 80d | 80e | 80f | |
|---|---|---|---|---|---|---|---|
| AIR FLOW VELOCITY vi | | | | | | | 102 |
| | 86a | 82b | 82c | 86d | 82e | 82f | 104 |
| FUEL FLOW RATE F2i | | | | | | | |
| | 88a | 84b | 84c | 88d | 84e | 84f | 106 |
| SECTOR FUEL-AIR RATIO F2i/A2i | | | | | | | 108 |
| | F2-1 | F2-2 | F2-3 | F2-4 | F2-5 | F2-6 | |

## FIG. 6

START

S1

MEASURE AIR FLOW VELOCITY (vi)

S2

CALCULATE F2 SECTOR
FUEL-AIR RATIO (F2i/A2i)

$$F2_i/A2_i = F2_i \Bigg/ \left\{ (Q-A1) \times \frac{v_i}{\displaystyle\sum_{i=1}^{n} v_i} \right\}$$

S3

F2i/A2i
OUTSIDE OPTIMAL VALUE
RANGE ?

NO

YES

S4

ADJUST FUEL FLOW RATE (F2i)

S5

F2i/A2i
WITHIN OPTIMAL VALUE
RANGE ?

NO

YES

S6

TERMINATE F2i ADJUSTMENT

END

## FIG. 7

## FIG. 8

## FIG. 9

## FIG. 10

Europäisches
Patentamt

European
Patent Office

Office européen
des brevets

## EUROPEAN SEARCH REPORT

Application Number

EP 14 19 0056

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 44 17 199 A1 (HITACHI LTD [JP]) 24 November 1994 (1994-11-24) * column 2, line 42 - line 56 * * column 4, line 9 - column 5, line 28 * * column 7, line 60 - column 8, line 60; figures 1, 2, 8a * | 1-9 | INV. F23N1/00 F23N5/18 F23R3/28 F23R3/46 |
| A | EP 2 620 708 A2 (HITACHI LTD [JP]) 31 July 2013 (2013-07-31) * paragraphs [0017], [0030], [0031], [0054], [0058], [0059], [0066]; figures 1,5 * | 1,6,7 | |
| A | US 2012/017600 A1 (SAITO NOZOMI [JP] ET AL) 26 January 2012 (2012-01-26) * paragraph [0061]; figure 1 * | 1 | |
| A | US 3 020 717 A (PEARCE JR RUFUS B) 13 February 1962 (1962-02-13) * column 1, line 59 - column 2, line 18 * * column 4, line 46 - line 69; figures 1, 2, 4 * | 1 | |

TECHNICAL FIELDS
SEARCHED     (IPC)

F23N
F23R
F02C

The present search report has been drawn up for all claims

| Place of search | Date of completion of the search | Examiner |
|---|---|---|
| The Hague | 20 February 2015 | Harder, Sebastian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 14 19 0056

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2015

| Patent document cited in search report | | Publication date | Patent family member(s) | | Publication date |
|---|---|---|---|---|---|
| DE 4417199 | A1 | 24-11-1994 | DE | 4417199 A1 | 24-11-1994 |
| | | | JP | H06323165 A | 22-11-1994 |
| | | | US | 5533329 A | 09-07-1996 |
| EP 2620708 | A2 | 31-07-2013 | CN | 103225822 A | 31-07-2013 |
| | | | EP | 2620708 A2 | 31-07-2013 |
| | | | JP | 5458121 B2 | 02-04-2014 |
| | | | JP | 2013155626 A | 15-08-2013 |
| | | | US | 2013192245 A1 | 01-08-2013 |
| US 2012017600 | A1 | 26-01-2012 | EP | 2447509 A2 | 02-05-2012 |
| | | | JP | 5635948 B2 | 03-12-2014 |
| | | | JP | 2012041919 A | 01-03-2012 |
| | | | US | 2012017600 A1 | 26-01-2012 |
| US 3020717 | A | 13-02-1962 | NONE | | |

EPO FORM P0459

For more details about this annex : see Official Journal of the European Patent Office, No. 12/82

**EP 2 865 945 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008082330 A